# EUROPEAN PATENT SPECIFICATION

(11) **EP 1 696 427 B1**
(45) Date of publication and mention of the grant of the patent: **26.09.2007**
(21) Application number: 06004034.2
(22) Date of filing: 28.02.2006
(51) Int. Cl.: G11B 7/08, G11B 7/22

(54) **Fitting structure for fitting laser holder to base member**
Befestigungsstruktur zur Befestigung eines Laserhalters an ein Basisteil
Structure de fixation pour la fixation d'un support laser à un élément de base

(30) Priority: 28.02.2005 JP 2005054064
(43) Date of publication of application: 30.08.2006
(73) Proprietor: Funai Electric Co., Ltd., Daito-shi Osaka 574-0013 (JP)
(72) Inventor: Imai, Kei, Daito-shi, Osaka 574-0013 (JP); Nishidate, Tetsuo, Daito-shi, Osaka 574-0013 (JP); Suetsugu, Masaaki, Daito-shi, Osaka 574-0013 (JP)
(74) Representative: Beetz & Partner

(56) References cited:
- EP-A- 1 148 482
- US-A1- 2004 017 762
- US-A1- 2004 145 998
- US-A1- 2004 257 927
- US-B1- 6 381 207
- PATENT ABSTRACTS OF JAPAN vol. 2003, no. 05, 12 May 2003 (2003-05-12) -& JP 2003 016659 A (KENWOOD CORP), 17 January 2003 (2003-01-17)
- PATENT ABSTRACTS OF JAPAN vol. 2003, no. 05, 12 May 2003 (2003-05-12) -& JP 2003 022542 A (NEC CORP), 24 January 2003 (2003-01-24)

## Description

### BACKGROUND OF THE INVENTION

### Field of the Invention

The present invention relates to a bonding structure in an optical pickup device for performing reproduction and recording on an optical disc as an information recording medium, such as a CD or a DVD. More specifically, the present invention relates to a fitting structure for fitting a laser holder holding a semiconductor laser to a base member.

### Description of the Prior Art

An optical pickup device typically has an optical head that makes reciprocal movement in the radial direction of a rotating optical disc. This optical head is mainly composed of: a semiconductor laser as a light source that emits laser light; a photodetector, such as a photodiode, that finally receives and detects reflected light from the optical disc based on the laser light emitted from the semiconductor laser and then converts it into an electrical signal; an optical system, such as a diffraction grating, a half mirror, or an objective lens, that guides the laser light emitted from the semiconductor laser to the photodetector through reflection on the optical disc; and a base member that is fitted with these components and driven.

Typically, in fitting the semiconductor laser to the base member, the semiconductor laser is first held by a laser holder. Then the laser holder holding the semiconductor laser is directly or indirectly fitted to the base member, and then, after its fitting position and posture are fixed through optical axis adjustment of the semiconductor laser, the laser holder is fixed by bonding with an adhesive. See, for example, JP-A-. 2003-187461 and JP-A-2003-22542.

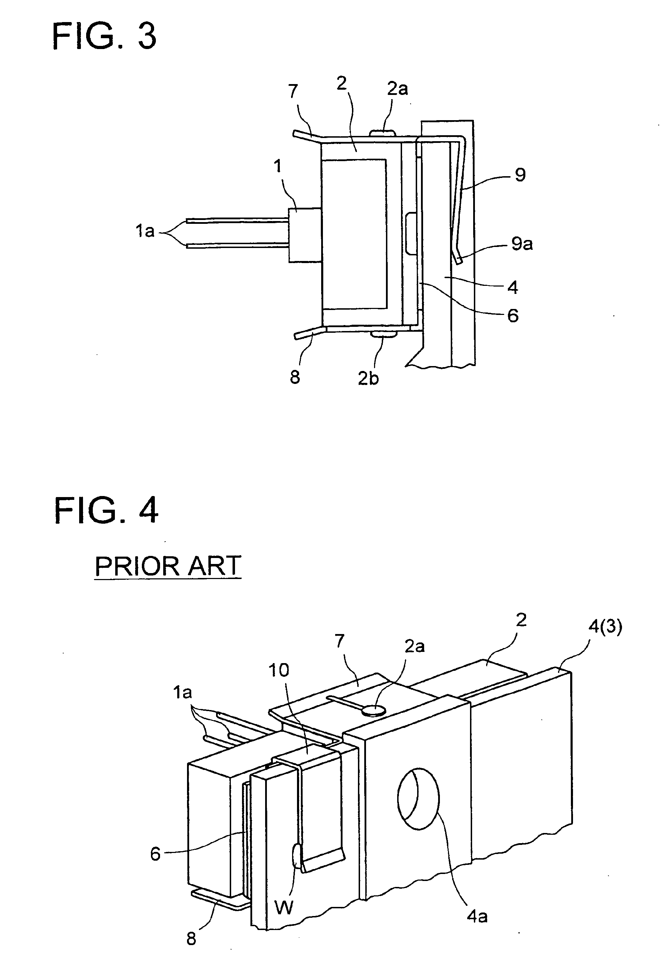

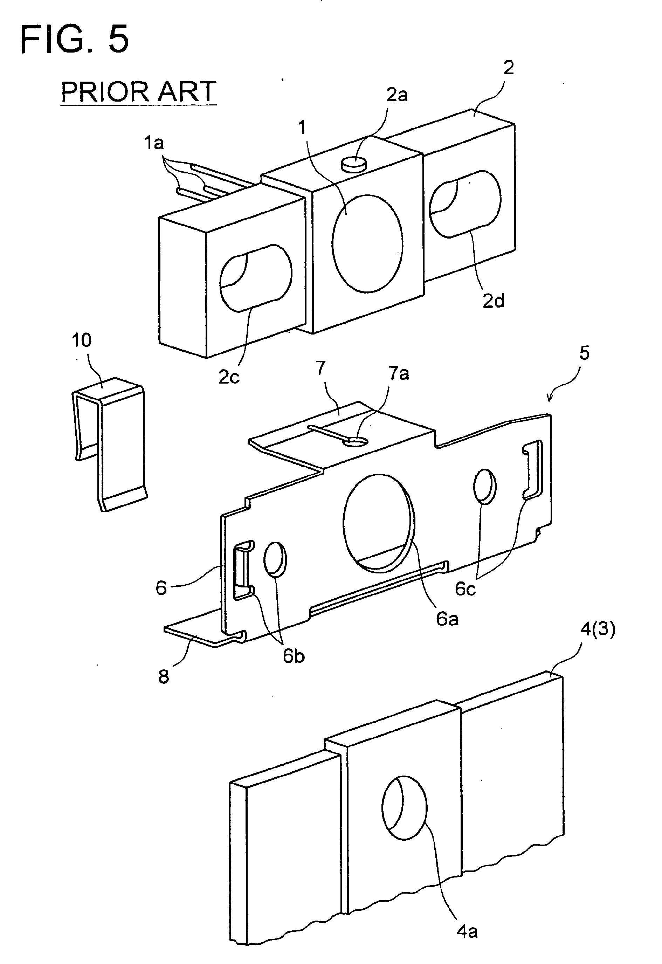

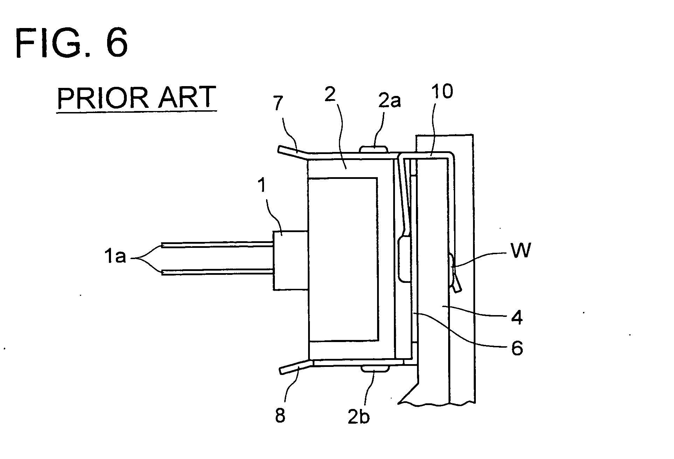

FIGS. 4 to 6 show an example of the fitting structure achieved by prior art. FIG. 4 is a perspective view of the conventional fitting structure for fitting a laser holder to a base member. FIG 5 is an exploded perspective view of the fitting structure. FIG. 6 is a side view of the fitting structure. In this conventional fitting structure, the laser holder is indirectly fitted to the base member. As shown in FIGS. 4 to 6, this fitting structure is composed of: the laser holder 2 which holds a semiconductor laser 1, a plate-like fitting part 4 which is vertically integrated with a base member 3 and to which the laser holder 2 is fitted, and also a support member 5 which supports the laser holder 2, and a clip piece 10 which is elastically deformable.

The laser holder 2 is a molded product of metal such as zinc, and has the semiconductor laser 1 held on the center thereof, so that laser light is emitted forward from the semiconductor laser 1. From the top and bottom surfaces of the laser holder 2, projecting shafts 2a and 2b respectively project coaxially in the vertical direction orthogonal to the optical axis of the semiconductor laser 1. Further, in both the right and left sides of the laser holder 2, fill ports 2c and 2d for filling an adhesive penetrate therethrough in the anteroposterior direction. In the figures, numeral 1a denotes a lead terminal of the semiconductor laser 1.

The base member 3 including the plate-like fitting part 4 is a molded product of metal such as zinc with excellent dimensional accuracy. Note that a molded product of resin such as polyphenylenesulfide (PPS) may be alternatively applied. In the center of the plate-like fitting part 4, a laser emission port 4a is formed which permits the emission of laser light from the fitted semiconductor laser 1 therethrough.

The support member 5 is formed by processing a metal plate such as phosphor bronze, and integrally has a base part 6 to be laid on the plate-like fitting part 4 of the base member 3, and an upper projecting part 7 and a lower projecting part 8 respectively projecting backward from the upper and lower edges of the base part 6 in such a manner as to oppose each other. In the upper projecting part 7 and the lower projecting part 8, shaft holes 7a and 8a (not shown) are formed coaxially in the vertical direction. In the shaft holes 7a and 8a, the two projecting shafts 2a and 2b of the laser holder 2 are respectively fitted, whereby the laser holder 2 is supported by the upper projecting part 7 and the lower projecting part 8 of the support member 5 so as to be swingable about the vertical axis (here, corresponding to the projecting shafts 2a and 2b for the shaft holes 7a and 8a). In the center of the base part 6, a laser passage hole 6a is formed which permits laser light from the semiconductor laser 1 of the supported laser holder 2 to pass therethrough. On both the right and left sides of the laser passage hole 6a, receiving holes 6b and 6c for receiving an adhesive are so formed as to respectively oppose the fill ports 2c and 2d of the laser holder 2 and penetrate through the base part 6 in the anteroposterior direction.

The clip piece 10 is formed by processing a metal plate such as phosphor bronze, and has a U-shaped cross section.

Next, a description will be further given on procedures for fitting the laser holder 2 (support member 5) to the base member 3 (plate-like fitting part 4) with the structure described above. First, the base part 6 of the support member 5 supporting the laser holder 2 is laid onto the plate-like fitting part 4 of the base member 3, and then the clip piece 10 is inserted from the upper edges of the base part 6 and the plate-like fitting part 4 on one of the left and right sides of the upper projecting part 7 (left side in this embodiment), whereby the base part 6 and the plate-like fitting part 4 are sandwiched by an elastic restoring force of the clip piece 10. That is, the support member 5 is temporarily fixed to the plate-like fitting part 4 of the base member 3 in a slidable manner.

Subsequently, an ultraviolet curable adhesive is applied to the leading end portion of the clip piece 10 and the front surface of the plate-like fitting part 4 that are in contact with each other (see symbol W in FIGS. 4 and 6), and these portions are exposed to ultraviolet irradiation for a predetermined period, whereby the clip piece 10 and the plate-like fitting part 4 are fixed to each other. The reason why the clip piece 10 and the plate-like fitting part 4 are fixed to each other by bonding in this manner is to prevent, upon subsequent optical axis adjustment of the semiconductor laser 1 or adhesive filling, the support member 5 sandwiched by the clip piece 10 from dropping from the plate-like fitting part 4, i.e., the base member 3, due to unexpected displacement of the clip piece 10.

Then, by the optical axis adjustment of the semiconductor laser 1, the position of the support member 5 with respect to the plate-like fitting part 4 of the base member 3 and the posture of the laser holder 2 with respect to the support member 5 are fixed, upon which the ultraviolet curable adhesive is filled through the fill ports 2c and 2d of the laser holder 2, so that the adhesive is filled into the gap between the laser holder 2 and the base part 6 of the support member 5 and also into the receiving holes 6b and 6c formed in the support member 5 of the base part 6 which holes connect to the plate-like fitting part 4 of the base member 3. Then, while the position of the support member 5 and the posture of the laser holder 2 are kept fixed, ultraviolet irradiation is performed for a predetermined period, whereby the laser holder 2, the support member 5, and the base member 3 are fixed to one another, thereby completing the fitting procedures.

In this manner, the laser holder 2 is indirectly fitted to the base member 3 with the support member 5 in between.

However, the conventional fitting structure described above requires the clip piece 10 as a separate component, and thus cost reduction performance, which has been strongly demanded in recent years, is remarkably limited. Moreover, before performing the optical axis adjustment of the semiconductor laser 1, both the clip piece 10 and the plate-like fitting part 4 of the base member 3 need to be fixed to each other by bonding operation, which deteriorates the operation efficiency.

### SUMMARY OF THE INVENTION

Thus, in view of the problem described above, the present invention has been made and relates to a fitting structure for fitting a laser holder holding a semiconductor laser to a base member. It is an object of the invention to provide a fitting structure successfully achieved at low cost and with improved operation efficiency.

To achieve the object described above, the present invention provides a fitting structure according to claim 1. A fitting structure for fitting a laser holder holding a semiconductor laser to a base member in an optical pickup device includes a support member of a metal plate that supports the laser holder. The support member integrally has: a base part having a laser passage hole that is formed in a center thereof for permitting laser light from the semiconductor laser to pass therethrough; an upper projecting part and a lower projecting part that respectively project from the upper and the lower edges of the base part so as to oppose each other and that support the laser holder so that the laser holder can swing about the vertical axis; and a bending part that is elastically deformable and that first projects from the upper edge of the base part toward a side opposite to a side toward which the upper projecting part projects and then is bent downward and also inward toward the base part. The plate-like fitting part of the base member is inserted from the lower projecting part along the base part, whereby the plate-like fitting part becomes sandwiched between the bending part and the base part by an elastic restoring force of the bending part, and then, after optical axis adjustment of the semiconductor laser, the laser holder, the support member, and the base member are fixed to one another with an adhesive.

According to this configuration, when the laser holder is indirectly fitted to the base member with the support member in between, temporary fixation of the support member to the plate-like fitting part of the base member in a slidable manner before the optical axis adjustment of the semiconductor laser is made can be achieved by sandwiching the base member between the base part and the bending part integrated with the support member, without requiring any other component. Moreover, in this sandwiching condition, the base part integrated with the support member is in contact with the plate-like fitting part of the base member over a wide range thereof, causing great frictional resistance between the two, so that the support member does not drop from the plate-like fitting part upon subsequent optical axis adjustment of the semiconductor laser or filling of the adhesive.

In view of stably securing contact between the base part and the plate-like fitting part over a wide range thereof, it is preferable that the bending part be formed on both the left and right sides of the upper projecting part.

For the purpose of smoothly inserting the support member to the plate-like fitting part, it is further preferable that the leading end portion of the bending part be bent outward.

Practically, it is preferable that adhesive be an ultraviolet curable adhesive.

In view of practicability, it is preferable that the laser holder and the base member be formed of metal.

### DESCRIPTION OF THE DRAWINGS

FIG 1 is a perspective view showing a fitting structure for fitting a laser holder to a base member according to one embodiment of the present invention;
FIG. 2 is an exploded perspective view of the fitting structure of FIG. 1;
FIG. 3 is a side view of the fitting structure of FIG. 1;
FIG 4 is a perspective view showing a conventional fitting structure for fitting a laser holder to a base member;
FIG. 5 is an exploded perspective view of the fitting structure of FIG. 4; and
FIG. 6 is a side view of the fitting structure of FIG. 4.

### DETAILED DESCRIPTION OF THE PREFERRED EMBODIMENTS

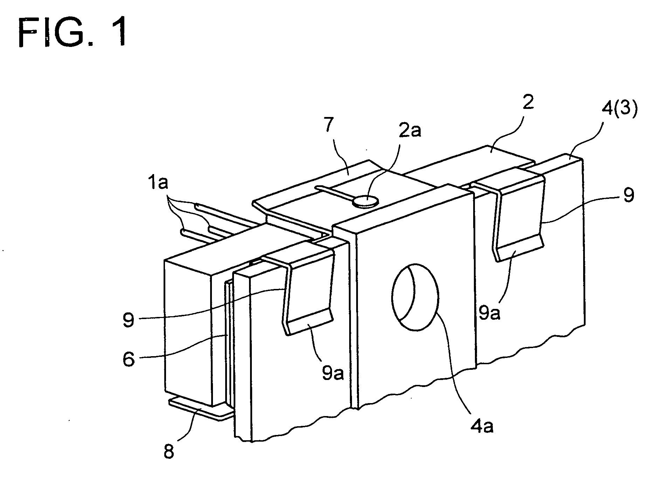

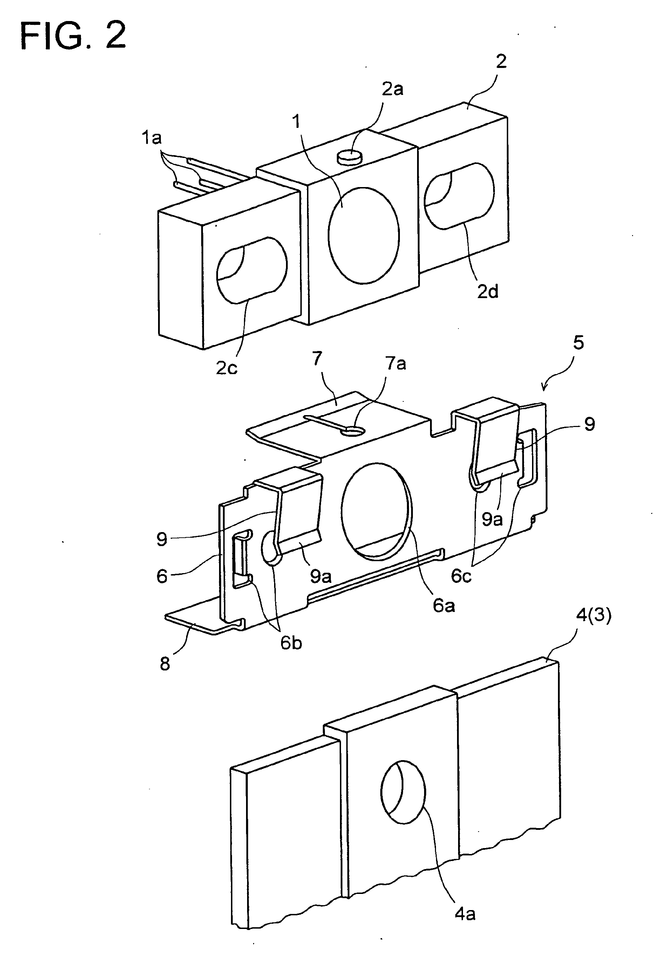

Hereinafter, a detailed description will be given on the fitting structure for fitting a laser holder to a base member according to one embodiment of the present invention, with reference to the accompanying drawings. FIG. 1 is a perspective view showing a fitting structure for fitting a laser holder to a base member according to one embodiment of the present invention. FIG. 2 is an exploded perspective view of the fitting structure. FIG. 3 is a side view of the fitting structure. In these figures, those having the same names and the same functions as those in FIGS. 4 to 6 are provided with the same numerals, and thus an overlapping description will be omitted as appropriate.

The fitting structure of the present embodiment is the same as the conventional fitting structure shown in FIGS. 4 to FIG. 6 in that the laser holder is indirectly fitted to the base member, and is composed of, as shown in FIGS. 1 to 3, the laser holder 2 which holds the semiconductor laser 1, the plate-like fitting part 4 which is integrated vertically with the base member 3 and to which the laser holder 2 is fitted, and also the support member 5 which supports the laser holder 2. Thus, this structure no longer requires the clip piece 10 as shown in FIGS. 4 to 6.

The support member 5 in this embodiment is, as is the case with that shown in FIGS. 4 to 6, formed by processing a metal plate such as phosphor bronze. The support member 5 has, as shown in FIGS. 1 to 3, the base part 6, the upper projecting part 7, and the lower projecting part 8 that are integrated altogether. The support member 5 of the present embodiment further has elastically deformable bending parts 9 and 9 that are integrally provided. The bending parts 9 and 9 project from the upper edge of the base part 6 on both the left and right sides of the upper projecting part 7 to a side opposite to a side to which the upper projecting part 7 projects and then are bent downward and also inward toward the base part 6. The bending parts 9 and 9 respectively have leading end portions 9a and 9a thereof bent outward away from the base part 6.

Next, a description will be given on procedures of fitting the laser holder 2 (support member 5) to the base member 3 (plate-like fitting part 4) with the structure described above. The support member 5 supporting the laser holder 2 is inserted from the lower projecting piece 8 along the plate-like fitting part 4 of the base member 3 in such a manner that the base part 6 is laid on the plate-like fitting part 4, and then the bending parts 9 and 9 are inserted from the upper edge of the plate-like fitting part 4, whereby the plate-like fitting part 4 is sandwiched between the bending parts 9, 9 and the base part 6 by an elastic restoring force of the bending parts 9 and 9. That is, the support member 5 is temporarily fixed to the plate-like fitting part 4 of the base member 3 in a slidable manner.

Then, through optical axis adjustment of the semiconductor laser 1, the fitting position of the support member 5 with respect to the plate-like fitting part 4 of the base member 3 and the posture of the laser holder 2 with respect to the support member 5 are fixed, upon which an ultraviolet curable adhesive is filled through the fill port 2c and 2d of the laser holder 2 into the gap between the laser holder 2 and the base part 6 of the support member 5 and also into the receiving hole 6b and 6c formed in the base part 6 of the support member 5 which holes connect to the plate-like fitting part 4 of the base member 3. Then while the fitting position of the support member 5 and the posture of the laser holder 2 are kept fixed, ultraviolet irradiation is performed for a predetermined period, whereby the laser holder 2, the support member 5, and the base member 3 are fixed to one another, thereby completing the fitting procedures.

In this manner, the laser holder 2 is indirectly fitted to the base member 3 with the support member 5 in between.

Consequently, when the laser holder 2 is indirectly fitted to the base member 3 with the support member 5 in between, temporary fixation of the support member 5 to the plate-like fitting part 4 of the base member 3 in a slidable manner before the optical axis adjustment of the semiconductor laser 1 is made can be achieved by sandwiching the base member 3 between the base part 6 and the bending parts 9, 9 integrated with the support member 5, without requiring any other component such as the conventional clip piece 10. Thus, compared to the conventional practice, the number of components used is reduced, thereby achieving cost reduction accordingly.

In this sandwiching condition, the base part 6 integrated with the support member 5 is in contact with the plate-like fitting part 4 of the base member 3 over a wide range thereof, causing great frictional resistance between the two, so that the support member 5 does not drop from the plate-like fitting part 4 upon subsequent optical axis adjustment of the semiconductor laser 1 or filling of the adhesive. Thus, compared to the conventional practice, since the bonding operation prior to the optical axis adjustment is never required, the amount of man-hours decreases, thus achieving an improvement in the operating efficiency. Especially in the present embodiment, the bending parts 9 and 9 are formed on both the left and right sides of the upper projecting part 7; therefore, the plate-like fitting part 4 can be sandwiched by the bending parts 9 and 9 from both the left and right sides. As a result, the contact between the base part 6 and the plate-like fitting part 4 over the wide range thereof can be stably secured, thus increasing the reliability in preventing the support member 5 from dropping upon the optical axis adjustment or the adhesive filling. In addition, when the optical pickup device is actually in use, unnecessary radiation from the semiconductor laser 1 is transmitted to the laser holder 2 and the support member 5 both made of metal, and then is sufficiently dissipated to the plate-like fitting part 4, that is, the base member 3, which is advantageous in reducing the unnecessary radiation.

Further, since the leading end portions 9a and 9a of the bending parts 9 and 9 are bent outward, the support member 5 can be inserted to the plate-like fitting part 4 smoothly without causing great friction between the leading end portions 9a, 9a and the plate-like fitting part 4.

Furthermore, for example, in the embodiment described above, the bending parts 9 and 9 are formed on both the left and right sides of the upper projecting part 7, but the bending part 9 may be alternatively formed on only either one of the left and right sides. Even when the plate-like fitting part 4 is sandwiched between one bending part 9 and the base part 6, the base part 6 is in contact with the plate-like fitting part 4 over a tentatively wide range thereof; therefore, it can be expected that the support member 5 can be prevented from dropping upon the optical axis adjustment or the adhesive filling.

## Claims

1. A fitting structure for fitting a laser holder holding a semiconductor laser to a base member in an optical pickup device, the fitting structure comprising a support member (5) of a metal plate that supports the laser holder (2),
**characterized in that** the support member integrally has: a base part (6) having a laser passage hole (6a) that is formed in a center thereof for permitting laser light from the semiconductor laser to pass therethrough; an upper projecting part (7) and a lower projecting part (8) that respectively project from an upper and a lower edges of the base part so as to oppose each other and that support the laser holder so that the laser holder can swing about a vertical axis; and a bending part (9) that is elastically deformable and that first projects from the upper edge of the base part toward a side opposite to a side toward which the upper projecting part projects and then is bent downward and also inward toward the base part,
wherein the base part (6) is adapted so that a plate-like fitting part (4) of the base member (3) can be inserted from the lower projecting part (8) along the base part (6) and the base member (3), whereby the plate-like fitting part becomes sandwiched between the bending part (9) and the base part by an elastic restoring force of the bending part, and then, after optical axis adjustment of the semiconductor laser, the laser holder (2), the support member (5), and the base member are located so that the laser holder, the support member, and the base member can be fixed to one another with an adhesive.

2. The fitting structure for fitting a laser holder to a base member according to claim 1,
wherein the bending part (9) is formed on both a left and a right sides of the upper projecting part (7).

3. The fitting structure for fitting a laser holder to a base member according to claim 1 or 2,
wherein a leading end portion of the bending part (9) is bent outward.

4. The fitting structure for fitting a laser holder to a base member according to at least one of claims 1 - 3,
wherein the adhesive is an ultraviolet curable adhesive.

5. The fitting structure for fitting a laser holder to a base member according to at least one of claims 1 - 4,
wherein the laser holder (2) and the base member (3) are formed of metal.

## Patentansprüche

1. Befestigungsstruktur zum Befestigen eines einen Halbleiterlaser haltenden Laserhalters an einem Basiselement in einer optischen Abnehmervorrichtung, wobei die Befestigungsstruktur ein Halteelement (5) einer Metallplatte umfasst, das den Laserhalter (2) hält;
**dadurch gekennzeichnet, dass** das Halteelement integral Folgendes aufweist: ein Basisteil (6) mit einem Laserdurchgangsloch (6a), das in seiner Mitte ausgebildet ist, um Laserlicht von dem Halbleiterlaser durch es hindurchgehen zu lassen; ein oberes Vorsprungsteil (7) und ein unteres Vorsprungsteil (8), die von einer oberen bzw. einer unteren Kante des Basisteils so vorstehen, dass sie einander gegenüberliegen, und die den Laserhalter so halten, dass der Laserhalter um eine vertikale Achse schwenken kann; und ein Biegeteil (9), das elastisch verformbar ist und das zunächst von der oberen Kante des Basisteils zu einer Seite hin vorsteht, die einer Seite gegenüberliegt, in deren Richtung sich das obere Vorsprungsteil erstreckt, und das dann nach unten und auch nach innen zum Basisteil hin gebogen ist,
wobei das Basisteil (6) so angepasst ist, dass ein plattenartiges Befestigungsteil (4) des Basiselements (3) vom unteren Vorsprungsteil (8) längs des Basisteils (6) und des Basiselements (3) eingefügt werden kann, wobei das plattenartige Befestigungsteil sandwichartig zwischen dem Biegeteil (9) und dem Basisteil durch eine elastische Rückstellkraft des Biegeteils umschlossen wird und dann, nach Einstellung der optischen Achse des Halbleiterlasers, der Laserhalter (2), das Halteelement (5) und das Basiselement so positioniert sind, dass der Laserhalter, das Halteelement und das Basiselement mit einem Klebemittel aneinander befestigt werden können.

2. Befestigungsstruktur zum Befestigen eines Laserhalters an einem Basiselement nach Anspruch 1,
wobei das Biegeteil (9) sowohl auf der linken als auch auf der rechten Seite des oberen Vorsprungsteils (7) ausgebildet ist.

3. Befestigungsstruktur zum Befestigen eines Laserhalters an einem Basiselement gemäß Anspruch 1 oder 2,
wobei ein vorderer Endabschnitt des Biegeteils (9) nach außen gebogen ist.

4. Befestigungsstruktur zum Befestigen eines Laserhalters an einem Basiselement nach mindestens einem der Ansprüche 1 - 3,
wobei das Klebemittel ein mit ultraviolettem Licht härtbares Klebemittel ist.

5. Befestigungsstruktur zum Befestigen eines Laserhalters an einem Basiselement nach mindestens einem der Ansprüche 1-4,
wobei der Laserhalter (2) und das Basiselement (3) aus Metall ausgebildet sind.

## Revendications

1. Structure de fixation pour la fixation d'une monture de laser supportant un laser à semi-conducteur sur un élément de base dans un dispositif de lecture optique, la structure de fixation comprenant un élément de support (5) d'une plaque métallique qui supporte la monture de laser (2),
**caractérisée en ce que** l'élément de support comprend : une pièce de base (6) avec un trou de passage du laser (6a) formé en son centre permettant la traversée de la lumière laser du laser à semi-conducteur ; une pièce supérieure en saillie (7) et une pièce inférieure en saillie (8) faisant respectivement saillie depuis un bord supérieur et depuis un bord inférieur de la pièce de base de manière à être opposées, et supportant la monture de laser de manière à permettre à celle-ci d'osciller autour d'un axe vertical ; et une pièce pliée (9) élastiquement déformable et faisant d'abord saillie du bord supérieur de la pièce de base vers un côté opposé à un côté vers lequel la pièce supérieure fait saillie, et qui est ensuite pliée vers le bas et donc vers l'intérieur relativement à la pièce de base,
dans laquelle ladite pièce de base (6) est ajustée de manière à permettre à une pièce de fixation en forme de plaque (4) de l'élément de base (3) d'être insérée par la pièce inférieure en saillie (8) le long de la pièce de base (6) et de l'élément de base (3), la pièce de fixation en forme de plaque étant serrée en position intercalée entre la pièce pliée (9) et l'élément de base par une force de rappel élastique de la pièce pliée, et la monture de laser (2), l'élément de support (5) et l'élément de base étant ensuite disposés de manière à pouvoir fixer entre eux par adhésif la monture de laser, l'élément de support et l'élément de base, après réglage optique axial du laser à semi-conducteur.

2. Structure de fixation pour la fixation d'une monture de laser sur un élément de base selon la revendication 1,
dans laquelle la pièce pliée (9) est formée sur le côté gauche et le côté droit de la pièce supérieure en saillie (7).

3. Structure de fixation pour la fixation d'une monture de laser sur un élément de base selon la revendication 1 ou 2,
dans laquelle une partie d'extrémité de la pièce pliée (9) est pliée vers l'extérieur.

4. Structure de fixation pour la fixation d'une monture de laser sur un élément de base selon au moins l'une des revendications 1 à 3,
dans laquelle l'adhésif est un adhésif réticulable par ultraviolets.

5. Structure de fixation pour la fixation d'une monture de laser sur un élément de base selon au moins l'une des revendications 1 à 4,
dans laquelle la monture de laser (2) et l'élément de base (3) sont en métal.
